# FASCICULE DE BREVET EUROPEEN

(11) **EP 1 141 668 B1**
(45) Date de publication et mention de la délivrance du brevet: **04.09.2002**
(21) Numéro de dépôt: 99963626.9
(22) Date de dépôt: 20.12.1999
(51) Int. Cl.: G01J 3/28, G01J 3/12

(54) **DISPOSITIF A REJET SPECTRAL DE FORMATION D'UNE IMAGE SUR UN CAPTEUR OPTIQUE**
VORRICHTUNG ZUM SPEKTRALEN ABBLENDEN IN EINEM OPTISCHEN BILDSENSOR
DEVICE WITH SPECTRAL REJECTION FOR FORMING AN IMAGE ON AN OPTICAL SENSOR

(30) Priorité: 31.12.1998 FR 9816729
(43) Date de publication de la demande: 10.10.2001
(73) Titulaire: Architecture, Traitement d'Images et Simulation, 13858 Aix en Provence Cedex 3 (FR)
(72) Inventeur: GUERN, Yves, F-13490 Jouques (FR)
(74) Mandataire: Ramey, Daniel
(86) Numéro de dépôt international: FR9903243
(87) Numéro de publication internationale: WO00040936

(56) Documents cités:
- EP-A- 0 132 342
- WO-A-97/02483
- US-A- 2 721 259
- US-A- 3 907 430
- US-A- 5 285 254
- US-A- 5 631 735

## Description

L'invention concerne un dispositif à rejet spectral de formation d'une image sur un capteur optique, ce dispositif comprenant des moyens de formation d'un faisceau de rayons lumineux parallèles issu d'une scène observée et des moyens optiques de focalisation du faisceau sur le capteur optique.

Il est déjà connu de détecter ou d'identifier une caractéristique particulière d'un faisceau lumineux issu d'une scène observée par comparaison des images de ce faisceau qui sont formées sur un capteur optique respectivement en l'absence d'un filtre et après traversée d'un filtre arrêtant une bande étroite de longueurs d'onde qui est particulière à la caractéristique recherchée, celle-ci étant par exemple la présence d'un gaz polluant ou toxique dans la zone observée.

On a proposé, dans le document US 2.721.259, un système de transmission d'informations dans lequel un faisceau lumineux émis par une lampe à éclairs est dispersé spectralement avant de passer sur un obstacle déplaçable dans la direction de dispersion spectrale du faisceau lumineux, pour moduler spectralement ce faisceau par le déplacement de l'obstacle, commandé par une information à transmettre.

Le faisceau lumineux est ensuite recombiné spectralement pour être transmis, puis est dispersé spectralement avant d'attaquer un récepteur tel qu'une cellule photo-électrique dont le signal de sortie est modulé d'une façon correspondant au déplacement de l'obstacle dans le faisceau lumineux émis. Ce système connu ne constitue pas un filtre optique permettant d'arrêter une bande étroite prédéterminée de longueurs d'onde dans un faisceau lumineux issu d'une scène observée et ne peut être utilisé à cette fin.

La réalisation de filtres optiques ayant une transmission sensiblement nulle sur une bande de longueurs d'onde relativement très étroite peut être délicate et leur utilisation présente un certain nombre d'inconvénients :
- ces filtres modifient en général la sensibilité et le point de fonctionnement des capteurs optiques,
- la bande de longueurs d'onde arrêtée par le filtre ne peut être modifiée ou modulée de façon continue,
- les filtres tournants ont en général pour effet de saturer le capteur et de modifier de façon notable et durable son point de fonctionnement quand le support des filtres passe devant le capteur,
- la présence d'un filtre sur le trajet optique induit un décalage géométrique entre les images obtenues à travers le filtre et celles obtenues sans le filtre,
- l'image obtenue à travers un filtre tournant manque de netteté, etc...

La présente invention a notamment pour but d'éviter ces inconvénients.
Elle propose à cet effet un dispositif à rejet spectral de formation d'une image sur un capteur optique, du type comprenant des moyens de formation d'un faisceau de rayons lumineux parallèles issu d'une scène observée, des moyens de dispersion spectrale du faisceau dans au moins une direction le long de laquelle les longueurs d'onde des rayons lumineux dispersés varient de façon sensiblement continue, au moins un masque interposé sur le trajet des rayons dispersés pour intercepter au moins une bande de longueurs d'onde, des moyens de positionnement et/ou de déplacement de ce masque sensiblement dans la direction précitée, des moyens de recombinaison desdits rayons dispersés en un faisceau de rayons parallèles et des moyens de focalisation du faisceau sur le capteur, caractérisé en ce que le masque est dimensionné pour intercepter une bande étroite de longueurs d'onde sans modifier la sensibilité et le point de fonctionnement du capteur et sans modifier sensiblement la transmission du dispositif quand il est positionné ou déplacé dans la direction précitée.

De façon générale, l'expression "bande étroite de longueurs d'onde" signifie que la bande de longueurs d'onde interceptée par le masque est relativement très étroite par rapport à la largeur spectrale du faisceau lumineux et/ou par rapport à la bande spectrale de fonctionnement du capteur optique.

Le dispositif selon l'invention ne présente aucun des inconvénients des filtres utilisés dans la technique antérieure :
- il s'intercale facilement dans le schéma optique du capteur à équiper,
- il ne modifie pas la sensibilité et le point de fonctionnement du capteur,
- la transmission du dispositif ne dépend pas de la bande de longueurs d'onde arrêtée,
- on peut moduler en continu et à cadence rapide, par exemple celle d'une caméra, la ou les longueurs d'onde arrêtées, dans la bande spectrale de fonctionnement du capteur,
- la variation de la ou des longueurs d'onde arrêtées ne modifie pas le point de fonctionnement du capteur,
- la présence de ce dispositif n'altère pas la qualité de l'image obtenue.

Selon différents modes de réalisation de l'invention :
- les moyens de dispersion spectrale du faisceau comprennent un prisme et une lentille placée entre le prisme et le masque, ce dernier se trouvant dans le plan focal de la lentille,
- les moyens de recombinaison comprennent une seconde lentille et un second prisme, par exemple identiques respectivement à la lentille et au prisme des moyens de dispersion, le masque se trouvant dans le plan focal objet de la seconde lentille,
- les moyens de dispersion comprennent un réseau plan ou concave et les moyens de recombinaison comprennent un miroir concave recevant les rayons dispersés par le réseau et les renvoyant vers une lentille de collimation, le masque étant interposé sur le trajet des rayons dispersés par le réseau ou sur le trajet des rayons réfléchis par le miroir concave,
- les moyens de dispersion comprennent un réseau concave associé à un miroir plan qui reçoit les rayons dispersés par le réseau concave et les réfléchit vers le masque et les moyens de recombinaison,
- les moyens de recombinaison comprennent un miroir plan et un réseau concave, le miroir plan recevant les rayons sortant des moyens de dispersion et les réfléchissant vers le réseau concave qui les reforme en un faisceau de rayons parallèles,
- les moyens de dispersion comprennent deux éléments identiques, tels que des prismes ou des réseaux, disposés l'un après l'autre et inversés l'un par rapport à l'autre pour fournir en sortie du second élément un faisceau de rayons monochromatiques parallèles,
- les moyens de recombinaison comprennent deux éléments identiques tels que des prismes ou des réseaux, disposés l'un après l'autre et inversés l'un par rapport à l'autre, le premier élément recevant les rayons séparés spectralement par les moyens de dispersion et les renvoyant vers le second élément qui les recombine en un faisceau de rayons polychromatiques parallèles,
- les moyens de recombinaison des rayons dispersés et les moyens de focalisation sur le capteur sont confondus.

Avantageusement, le masque est déplaçable de façon périodique à une cadence synchrone avec celle de fonctionnement d'une caméra, sur une distance qui correspond sensiblement à la largeur spectrale du capteur optique.

Ce masque et ses moyens de positionnement et de déplacement peuvent avantageusement être constitués par un galvanomètre, dont l'aiguille forme le masque. En variante, le masque peut être une aiguille montée sur un chariot motorisé ou entraîné par des moyens appropriés.

Dans une forme particulière de réalisation de l'invention, le capteur optique comprend des capteurs élémentaires du type TDI (Time Delay Integration) associés à des moyens de traitement de données pour une analyse multispectrale simultanée du faisceau capté, ces moyens de traitement permettant également de soustraire les uns des autres les signaux de sortie de capteurs élémentaires voisins acquis au même instant, et d'obtenir la dérivée par rapport à la longueur d'onde du flux lumineux reçu par lesdits capteurs.

De façon générale, l'invention permet de moduler à volonté un rejet spectral de faible largeur dans un faisceau lumineux reçu par un dispositif optique qui en forme une image sur un capteur. L'invention permet également de rejeter une ou plusieurs longueurs d'onde fixes dans un flux lumineux reçu par un capteur. Ses applications sont donc extrêmement nombreuses et variées.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement un système optique de formation d'images comprenant un dispositif selon l'invention,
- la figure 2 représente schématiquement un premier mode de réalisation du dispositif selon l'invention,
- les figures 3 et 4 sont des graphes représentant schématiquement l'amplitude en fonction de la longueur d'onde d'un flux lumineux reçu par un capteur et la dérivée de ce flux par rapport à la longueur d'onde, respectivement,
- les figures 5, 6, 7 et 8 représentent schématiquement des variantes de réalisation du dispositif selon l'invention.

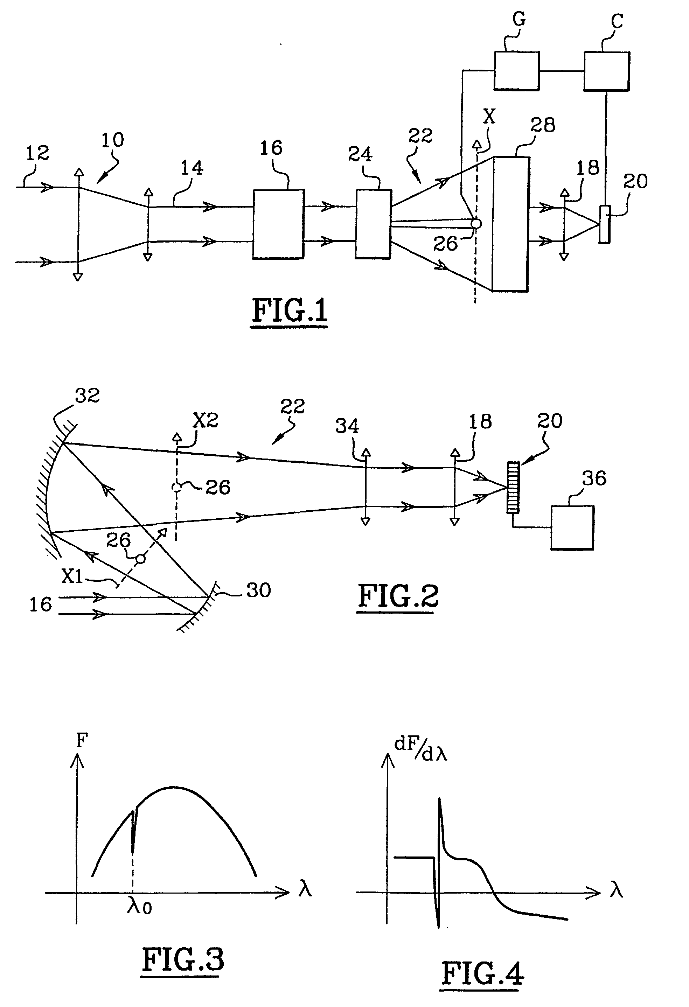

Le système imageur représenté schématiquement en figure 1 comprend essentiellement un objectif 10 captant un flux lumineux 12 issu d'une scène observée (non représentée) et formant un faisceau 14 de rayons lumineux parallèles sur un système 16 de balayage (par exemple horizontal et vertical ou seulement horizontal) associé à une lentille 18 de focalisation du faisceau lumineux sur un capteur 20, ou sur une barrette de capteurs quand le système 16 effectue un balayage dans une seule direction (la direction de la barrette étant perpendiculaire à la direction du balayage), ce système comprenant encore un dispositif selon l'invention, désigné globalement par la référence 22 et permettant de rejeter ou d'éliminer une composante spectrale de longueur d'onde déterminée dans le faisceau lumineux transmis par le système 16 de balayage à la lentille de focalisation 18.

Ce dispositif 22 comprend essentiellement des moyens 24 de dispersion spectrale, tels qu'un prisme ou un réseau par exemple, qui permettent de décomposer angulairement le faisceau lumineux reçu du système de balayage 16, de telle sorte que la longueur d'onde varie de façon sensiblement continue pour un observateur qui se déplace le long d'une direction X perpendiculaire à l'axe optique du système de la figure 1.

Le dispositif selon l'invention comprend encore au moins un masque 26, placé dans le faisceau de rayons dispersés et fixe ou déplaçable dans la direction X, la largeur du masque 26 ou sa dimension selon l'axe X lui permettant d'intercepter une petite partie du faisceau de rayons dispersés, correspondant à une bande relativement très étroite de longueurs d'onde.

Des moyens 28 sont disposés entre le masque 26 et la lentille de focalisation 18 pour recombiner le faisceau de rayons dispersés en un faisceau de rayons polychromatiques parallèles dirigé sur la lentille 18 et focalisé par celle-ci sur le capteur 20.

La position du masque 26 sur l'axe X permet de déterminer la bande étroite de longueurs d'onde qui est arrêtée (ou non transmise) par le dispositif selon l'invention.

On comprend immédiatement que :
- l'intensité des longueurs d'onde qui sont effectivement transmises à la lentille de focalisation 18 ne dépend pas de la position du masque 26 sur l'axe X,
- la variation du flux total sur la lentille de focalisation 18 quand le masque 26 est déplacé sur l'axe X est continue,
- le point de fonctionnement du capteur 20 n'est pas modifié de façon brutale lors du déplacement du masque 26 sur l'axe X,
- en lumière infrarouge, le flux issu du masque lui-même compense approximativement celui qui est bloqué par le masque de sorte que le point de fonctionnement du capteur 20 n'est pas modifié de façon sensible.

Avantageusement, les moyens de déplacement associés au masque 26 permettent de le déplacer le long de l'axe X sur une distance qui correspond sensiblement, dans le faisceau de rayons dispersés, à la largeur spectrale de fonctionnement du capteur 20. En outre, le déplacement du masque 26 peut être périodique et par exemple synchronisé avec la cadence de fonctionnement d'une caméra.

Dans un mode de réalisation préféré, le masque 26 est constitué par une aiguille d'un galvanomètre G, l'aiguille ayant une largeur (dimension le long de l'axe X) de 0,5 mm par exemple, correspondant à une largeur spectrale de 0,2 µm. La largeur spectrale à balayer étant par exemple 8 - 12 µm (bande III de l'infrarouge), la course du masque 26 est dans cet exemple de l'ordre du centimètre, ce qui correspond à une vitesse de déplacement du masque de l'ordre de 50 cm/s à la cadence vidéo si on change la position du masque à chaque image.

Le galvanomètre G est piloté par des moyens C de traitement de l'information qui peuvent également être associés au capteur 20 ou à la barrette de capteurs. En variante, le masque 26 formé d'une aiguille peut être monté sur un chariot motorisé ou entraîné en déplacement par des moyens appropriés.

Un premier mode de réalisation du dispositif selon l'invention est représenté schématiquement en figure 2 et comprend un réseau 30 de diffraction (réseau plan ou concave) qui reçoit le faisceau lumineux issu du système de balayage 16 et le réfléchit en le dispersant spectralement vers un miroir concave 32 qui le réfléchit vers une lentille de collimation 34 dont sort un faisceau de rayons parallèles dirigé vers la lentille de focalisation 18 associée au capteur 20.

Dans ce mode de réalisation, le masque 26 est déplaçable soit le long de l'axe X1 entre le réseau 30 et le miroir concave 32, soit le long de l'axe X2 entre le miroir concave 32 et la lentille de collimation 34. Dans les deux cas, il intercepte une bande étroite de longueurs d'onde qui peut varier de façon continue quand on déplace le masque le long de l'axe X1 ou X2.

Alternativement, on peut arriver au même résultat en laissant le masque fixe et en déplaçant les moyens disperseurs 24 ou les moyens de recombinaison 28 par rapport au masque. Par exemple, on peut faire tourner le réseau plan 30 (ou le miroir concave 32) autour d'un axe perpendiculaire au plan du dessin (la largeur spectrale de fonctionnement des moyens de dispersion ou respectivement de recombinaison étant alors supérieure à celle du capteur 20 pour éviter les "effets de bords").

Eventuellement, la lentille 34 et la lentille de focalisation 18 peuvent être remplacées par une lentille unique.

Le capteur 20 peut être une barrette de photodétecteurs du type TDI (Time Delay Integration) dont les signaux respectifs sont normalement sommés de telle sorte qu'au regard de l'utilisateur, la barrette de photodétecteurs constitue un détecteur unique, ayant un rapport signal/bruit meilleur que ceux des photodétecteurs élémentaires. Selon l'invention, une telle barrette de photodétecteurs est utilisée sans sommation des signaux de sortie des photodétecteurs élémentaires, de façon à obtenir autant d'images différentes d'une même scène qu'il y a de photodétecteurs dans la barrette, chacune de ces images obtenues à un instant donné étant géométriquement décalée par rapport aux autres images obtenues au même instant, chacune de ces images étant également décalée spectralement par rapport aux autres.

A la fin d'un cycle de balayage, on dispose donc de n images décalées géométriquement et spectralement (n étant le nombre de photodétecteurs de la barrette) et dont les décalages sont connus. On peut ainsi faire une analyse multispectrale et simultanée d'un flux lumineux issu d'une scène observée.

En outre, lorsqu'on fait la différence entre deux signaux qui sont légèrement décalés l'un par rapport en longueur d'onde, on obtient un signal dérivé du type dF(λ)/dλ, où F(λ) est le flux reçu à la longueur d'onde λ. Une analyse de ce signal peut permettre une détection directe d'une anomalie dans la courbe d'émission du corps noir comme représenté schématiquement aux, figures 3 et 4 où l'on voit qu'une anomalie à la longueur d'onde λ₀ à la figure 3 est bien mise en évidence dans la courbe de la figure 4.

Le signal dF/dλ peut être obtenu par soustraction des signaux de sortie des photodétecteurs élémentaires du type TDI, ou bien il peut être obtenu avec un photodétecteur d'un type classique, par soustraction d'images acquises successivement pour des positions peu différentes du masque 26.

De façon évidente pour l'homme de métier, des moyens 36 de traitement de l'information sont raccordés au capteur 20 pour piloter les photodétecteurs élémentaires et effectuer les opérations précitées.

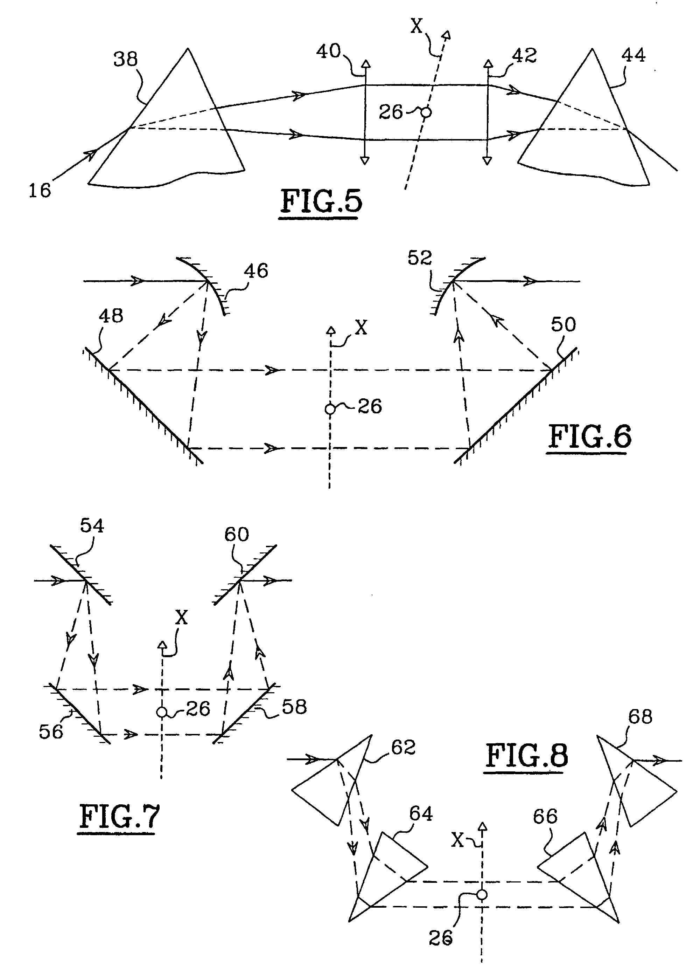

Dans un mode de réalisation préféré représenté en figure 5, les moyens de dispersion spectrale 24 comprennent un prisme 38 assurant la dispersion angulaire des longueurs d'onde reçues des moyens de balayage 16, et une lentille 40 qui forme une image de ce faisceau dans son plan focal.

Chaque longueur d'onde est caractérisée en sortie du prisme 38 par une inclinaison particulière sur l'axe de la lentille 40 et un point image associé à chaque longueur d'onde est formé dans le plan focal de cette lentille à une distance de l'axe qui correspond à son angle de déviation.

Le masque 26 est placé dans le plan focal de la lentille 40 et est déplaçable sur un axe X qui peut être légèrement incliné par rapport à une perpendiculaire à l'axe optique pour compenser le chromatisme de la lentille 40, c'est-à-dire la variation de la distance focale de cette lentille due à l'évolution de l'indice optique avec la longueur d'onde. Typiquement, cet angle d'inclinaison est de l'ordre de 5°.

Les moyens de recombinaison 28 comprennent une autre lentille 42 identique à la lentille 40, et un prisme 44 identique au prisme 38 précité. Les lentilles 40 et 42 sont coaxiales et le masque 26 se trouve dans le plan focal objet de la seconde lentille 42. Les rayons lumineux sortant de cette lentille sont donc collimatés et recombinés par le prisme 44.

En variante, le second prisme 44 n'est pas identique au prisme 38 des moyens de dispersion. Il suffit qu'il présente des caractéristiques de dispersion semblables à celles du prisme 38, et on lui associe alors une lentille 42 appropriée, qui sera différente de la lentille 40 des moyens de dispersion.

Dans ce dispositif, les performances atteintes avec des prismes en CaF2 et des lentilles en ZnSe sont une transmission globale comprise entre 75 et 80% environ, la décomposition spectrale étant conservée quelle que soit la position du masque 26 sur l'axe X. Avec un faisceau incident ayant un diamètre de l'ordre du centimètre et une largeur de masque 26 d'environ 0,5 mm, on peut rejeter 100% du flux sur une largeur spectrale de 0,2 µm, avec une pente de changement d'état inférieure à 0,02 µm. La variation de la longueur d'onde sur l'axe X est quasi linéaire et la dimension du faisceau lumineux en entrée n'est pas limitée, ce qui est un avantage dans le cas où le dispositif est associé à un imageur infrarouge.

Dans un autre mode de réalisation préféré représenté en figure 6, les moyens de dispersion spectrale comprennent un réseau concave 46 qui réalise simultanément la dispersion et la focalisation assurées dans le mode de réalisation de la figure 5 par l'ensemble prisme 38-lentille 40, ce réseau concave 46 étant associé à un miroir plan 48 qui réfléchit les rayons dispersés et focalisés dans le plan du masque, vers les moyens de recombinaison formés d'un autre miroir plan 50 et d'un réseau concave 52 qui remplit les fonctions de la lentille 42 et du prisme 44 du mode de réalisation de la figure 5, c'est-à-dire qui collimate et recombine les rayons reçus du miroir 50.

Le masque 26 est placé entre les miroirs 48 et 50 et est déplaçable selon un axe X perpendiculaire aux rayons lumineux.

Le mode de réalisation de la figure 6 présente l'avantage d'être plus facilement intégrable dans le schéma optique d'un imageur existant que celui de la figure 5.

Dans les variantes de réalisation des figures 7 et 8, le dispositif selon l'invention combine des prismes ou des réseaux, les moyens de dispersion spectrale comprenant deux composants identiques (deux prismes ou deux réseaux) qui sont inversés l'un par rapport à l'autre, ce qui permet d'obtenir une séparation des rayons parallèlement les uns aux autres, et les moyens de recombinaison sont formés du même ensemble de composants que les moyens de dispersion, cet ensemble étant inversé pour utiliser la propriété de retour inverse de la lumière et recombiner le faisceau lumineux dans sa forme initiale.

En figure 7, les moyens de dispersion spectrale comprennent donc deux réseaux identiques 54 et 56 respectivement qui sont inversés l'un par rapport à l'autre, le second réseau donnant une déviation angulaire qui compense exactement celle du premier réseau 54, et les moyens de recombinaison sont eux-mêmes formés de deux réseaux identiques 58 et 60 qui sont inversés l'un par rapport à l'autre, le masque étant disposé entre les réseaux 56 et 58 et déplaçable sur un axe X perpendiculaire aux rayons transmis du réseau 56 au réseau 58.

En figure 8, les composants des moyens de dispersion spectrale et des moyens de recombinaison sont des prismes, les moyens de dispersion spectrale comprenant deux prismes identiques 62 et 64 respectivement, inversés l'un par rapport à l'autre, les moyens de recombinaison comprenant également deux prismes identiques 66 et 68 inversés, le masque 26 étant disposé entre les prismes 64 et 66 et déplaçable dans une direction X perpendiculaire aux rayons lumineux transmis du prisme 64 au prisme 66.

Les performances des modes de réalisation représentés aux figures 7 et 8 sont excellentes, le masque 26 permettant d'obtenir une transmission nulle sur une largeur spectrale de 0,2 µm quand il a une dimension de l'ordre du millimètre, le diamètre du faisceau initial étant inférieur ou égal à un millimètre environ. Pour les applications à un imageur infrarouge pour lesquelles la dimension du faisceau initial est de l'ordre du centimètre, on utilise en entrée un réducteur de faisceau pour adapter sa taille à celle du masque.

Les dispositifs selon l'invention qui ont été décrits et représentés dans les dessins sont du type fonctionnant en transmission. L'invention s'applique également aux dispositifs travaillant en réflexion, par exemple avec un miroir interposé entre les moyens de dispersion spectrale et les moyens de recombinaison. Dans ce cas, le masque est formé par une fente dans un miroir mobile, et la bande étroite de longueurs d'onde qui passe par la fente du miroir est "rejetée spectralement".

Bien entendu, l'invention est applicable à l'analyse spectrale de toute bande de longueurs d'onde (spectre visible, ultraviolet, infrarouge lointain, etc...).

## Revendications

1. Dispositif à rejet spectral de formation d'une image sur un capteur optique, comprenant des moyens (10) de formation d'un faisceau de rayons lumineux parallèles issu d'une scène observée, des moyens (24) de dispersion spectrale du faisceau dans au moins une direction (X) le long de laquelle les longueurs d'onde des rayons lumineux dispersés varient de façon sensiblement continue, au moins un masque (26) interposé sur le trajet des rayons dispersés pour intercepter au moins une bande de longueurs d'onde, des moyens de positionnement et/ou de déplacement de ce masque sensiblement dans la direction précitée, des moyens (28) de recombinaison des rayons dispersés en un faisceau de rayons parallèles, et des moyens (18) de focalisation du faisceau recombiné sur le capteur (20), **caractérisé en ce que** le masque est dimensionné pour intercepter une bande étroite de longueurs d'onde sans modifier la sensibilité et le point de fonctionnement du capteur (20) et sans modifier sensiblement la transmission du dispositif quand il est positionné ou déplacé dans la direction précitée.

2. Dispositif selon la revendication 1, **caractérisé en ce qu'**il comprend des moyens de déplacement du masque (26) à vitesse élevée sur une distance correspondant sensiblement à la largeur spectrale du capteur optique (20).

3. Dispositif selon l'une des revendications précédentes, **caractérisé en ce que** le masque (26) est déplacé de façon périodique à une cadence synchrone avec celle de fonctionnement d'une caméra.

4. Dispositif selon l'une des revendications précédentes, **caractérisé en ce que** le masque (26) et ses moyens de déplacement comprennent un galvanomètre dont l'aiguille forme le masque, ou une aiguille montée sur un chariot.

5. Dispositif selon l'une des revendications 1 à 3, **caractérisé en ce qu'**il fonctionne en réflexion et **en ce que** le masque est formé par la fente d'un miroir mobile placé entre les moyens de dispersion et les moyens de recombinaison.

6. Dispositif selon l'une des revendications précédentes, **caractérisé en ce que** le capteur optique (20) comprend une série de capteurs élémentaires du type TDI ou Time Delay Integration pilotés pour fournir chacun une image élémentaire de la scène observée.

7. Dispositif selon l'une des revendications précédentes, **caractérisé en ce qu'**il comprend des moyens de traitement de l'information, associés au capteur optique (20) pour soustraire les uns des autres les signaux de sortie de capteurs du type TDI acquis simultanément, ou pour soustraire les uns des autres des signaux de sortie du capteur optique acquis successivement pour des positions de masque peu différentes et obtenir la dérivée par rapport à la longueur d'onde du flux lumineux reçu par ledit capteur optique.

8. Dispositif selon l'une des revendications 1 à 7, **caractérisé en ce que** les moyens (24) de dispersion spectrale du faisceau comprennent un prisme (38) et une lentille (40) placée entre le prisme et le masque (26), ce dernier se trouvant dans le plan focal de la lentille (40).

9. Dispositif selon la revendication 8, **caractérisé en ce que** les moyens (28) de recombinaison comprennent une seconde lentille (42) et un second prisme (44), par exemple identiques respectivement à la lentille et au prisme des moyens de dispersion (24), le masque (26) se trouvant dans le plan focal objet de la seconde lentille (42).

10. Dispositif selon la revendication 8 ou 9, **caractérisé en ce que** la direction X de déplacement du masque (26) est inclinée en oblique sur l'axe de la lentille (40) des moyens de dispersion pour corriger le chromatisme de cette lentille.

11. Dispositif selon l'une des revendications 1 à 7, **caractérisé en ce que** les moyens de dispersion comprennent un réseau plan ou concave (30) et les moyens de recombinaison comprennent un miroir concave (32) recevant les rayons dispersés par le réseau (30) et les renvoyant vers une lentille de collimation (34), le masque étant interposé sur le trajet des rayons dispersés par le réseau (30) ou sur le trajet des rayons réfléchis par le miroir concave (32).

12. Dispositif selon l'une des revendications 1 à 7, **caractérisé en ce que** les moyens de dispersion comprennent un réseau concave (46) associé à un miroir plan (48) qui reçoit les rayons dispersés par le réseau concave et les réfléchit vers le masque (26) et les moyens de recombinaison.

13. Dispositif selon la revendication 12, **caractérisé en ce que** les moyens de recombinaison comprennent un miroir plan (50) et un réseau concave (52), le miroir plan recevant les rayons sortant des moyens de dispersion et les réfléchissant vers le réseau concave (52) qui les reforme en un faisceau de rayons parallèles.

14. Dispositif selon l'une des revendications 1 à 7, **caractérisé en ce que** les moyens de dispersion comprennent deux éléments identiques (54, 56, 62, 64), tels que des prismes ou des réseaux, disposés l'un après l'autre et inversés l'un par rapport à l'autre pour fournir en sortie du second élément (56, 64) un faisceau de rayons monochromatiques parallèles.

15. Dispositif selon la revendication 14, **caractérisé en ce que** les moyens de recombinaison comprennent deux éléments identiques (58, 60, 66, 68), tels que des prismes ou des réseaux, disposés l'un après l'autre et inversés l'un par rapport à l'autre, le premier élément (58, 66) recevant les rayons séparés spectralement par les moyens de dispersion et les renvoyant vers le second élément (60, 68) qui les recombine en un faisceau de rayons polychromatiques parallèles.

16. Dispositif selon la revendication 15, **caractérisé en ce que** le masque (26) est disposé entre le second élément (56, 64) des moyens de dispersion et le premier élément (58, 66) des moyens de recombinaison et est déplaçable perpendiculairement aux rayons parallèles sortant des moyens de dispersion.

## Patentansprüche

1. Vorrichtung mit spektraler Ausblendung zur Erzeugung eines Bildes auf einem optischen Sensor, mit Mitteln (10) zur Erzeugung eines Bündels paralleler Lichtstrahlen, das von einem Beobachtungsausschnitt ausgeht, Mitteln (24) zur spektralen Dispersion des Lichtbündels in wenigstens einer Richtung (X), in der sich die Wellenlängen der Streustrahlen im wesentlichen kontinuierlich ändern, wenigstens einer im Strahlengang der Streustrahlen befindlichen Blende (26), um wenigstens ein Wellenlängenband abzuschirmen, Mitteln zum Positionieren bzw. Verschieben der Blende im wesentlichen in der vorgenannten Richtung, Mitteln (28) zum Rekombinieren der Streustrahlen in einem Bündel paralleler Lichtstrahlen und Mitteln (18) zur Fokussierung des rekombinierten Lichtbündels auf den Sensor (20),
**dadurch gekennzeichnet, dass** die Blende so bemessen ist, dass ein schmales Wellenlängenband abgeschirmt wird, ohne die Empfindlichkeit und den Arbeitspunkt des Sensors (20) zu verändern und ohne die Transmission der Vorrichtung merklich zu verändern, wenn sie in der vorgenannten Richtung positioniert oder verschoben wird.

2. Vorrichtung nach Anspruch 1,
**dadurch gekennzeichnet, dass** sie Mittel zum Verschieben der Blende (26) mit hoher Geschwindigkeit über eine Distanz umfasst, die in etwa der Spektralbreite des optischen Sensors (20) entspricht.

3. Vorrichtung nach einem der vorhergehenden Ansprüche,
**dadurch gekennzeichnet, dass** die Blende (26) periodisch mit einer Kadenz verschoben wird, die synchron zu der Betriebskadenz einer Kamera ist

4. Vorrichtung nach einem der vorhergehenden Ansprüche,
**dadurch gekennzeichnet dass** die Blende (26) und die Mittel zu ihrem Verschieben ein Galvanometer aufwelsen, dessen Zeiger die Blende bildet, oder einen auf einem Schlitten montierten Zeiger.

5. Vorrichtung nach einem der Ansprüche 1 bis 3,
**dadurch gekennzeichnet, dass** sie durch Reflexion funktioniert und dass die Blende durch einen Spalt eines beweglichen Spiegels gebildet ist, der zwischen den Dispersionsmitteln und den Rekombinationsmitteln angeordnet ist.

6. Vorrichtung nach einem der vorhergehenden Ansprüche,
**dadurch gekennzeichnet, dass** der optische Sensor (20) eine Reihe von Elementarsensoren vom Typ TDI (Time Delay Integration) umfasst, die so gesteuert werden, dass jeder ein Elementarbild des Beobachtungsausschnitts liefert.

7. Vorrichtung nach einem der vorhergehenden Ansprüche,
**dadurch gekennzeichnet, dass** sie Mittel zur Informationsverarbeitung aufweist, die dem optischen Sensor (20) zugehörig sind, um die Differenz zwischen den gleichzeitig gewonnenen Ausgangssignalen der TDI-Sensoren zu bilden, oder um die Differenz zwischen den Ausgangssignalen des optischen Sensors zu bilden, die nacheinander für nur geringfügig voneinander abweichenden Blendenpositionen gewonnen werden, und die Ableitung der Wellenlänge des vom optischen Sensor empfangenen Lichtstroms zu erhalten.

8. Vorrichtung nach einem der Ansprüche 1 bis 7,
**dadurch gekennzeichnet, dass** die Mittel (24) zur spektralen Dispersion des Lichtbündels ein Prisma (38) und eine zwischen dem Prisma und der Blende (26) angeordnete Linse (40) umfassen, wobei sich die Blende in der Brennebene der Linse (40) befindet.

9. Vorrichtung nach Anspruch 8,
**dadurch gekennzeichnet, dass** die Rekombinationsmittel (28) eine zweite Linse (42) und ein zweites Prisma (44) umfassen, die beispielsweise mit der Linse und dem Prisma der Dispersionsmittel (24) identisch sind, wobei sich die Blende (26) in der Brennebene der zweiten Linse (42) befindet.

10. Vorrichtung nach Anspruch 8 oder 9,
**dadurch gekennzeichnet, dass** die Richtung X, in der die Blende (26) verschoben wird, auf der Achse der Linse (40) der Dispersionsmittel schräg geneigt ist, um den chromatischen Abbildungsfehler der Linse zu korrigieren.

11. Vorrichtung nach einem der Ansprüche 1 bis 7,
**dadurch gekennzeichnet, dass** die Dispersionsmittel ein Plan- oder Konkavgitter (30) und die Rekombinationsmittel einen Konkavspiegel (32) umfassen, der die durch das Gitter (30) gestreuten Strahlen aufnimmt und zu einer Kollimationslinse (34) zurückstrahlt, wobei sich die Blende im Strahlengang der durch das Gitter (30) gestreuten Strahlen oder im Strahlengang der durch den Konkavspiegel (32) reflektierten Strahlen befindet.

12. Vorrichtung nach einem der Ansprüche 1 bis 7,
**dadurch gekennzeichnet, dass** die Dispersionsmittel ein Konkavgitter (46) umfassen, das einem Planspiegel (48) zugehörig ist, der die durch das Konkavgitter gestreuten Strahlen aufnimmt und sie zur Blende (26) und den Rekombinationsmitteln reflektiert.

13. Vorrichtung nach Anspruch 12,
**dadurch gekennzeichnet, dass** die Rekombinationsmittel einen Planspiegel (50) und ein Konkavgitter (52) umfassen, wobei der Planspiegel die aus den Dispersionsmitteln austretenden Strahlen aufnimmt und sie zu einem Konkavgitter (52) reflektiert, das sie wieder in ein Bündel paralleler Lichtstrahlen umbildet.

14. Vorrichtung nach einem der Ansprüche 1 bis 7,
**dadurch gekennzeichnet, dass** die Dispersionsmittel zwei identische Elemente (54, 56, 62, 64) wie Prismen oder Gitter umfassen, die hintereinander spiegelbildlich angeordnet sind, um beim Verlassen des zweiten Elements (56, 64) ein Bündel paralleler monochromatischer Lichtstrahlen zu erzeugen.

15. Vorrichtung nach Anspruch 14,
**dadurch gekennzeichnet, dass** die Rekombinationsmittel zwei identische Elemente (58, 60, 66, 68) wie Prismen oder Gitter umfassen, die hintereinander spiegelbildlich angeordnet sind, wobei das erste Element (58, 66) die durch die Dispersionsmittel spektral geteilten Strahlen aufnimmt und sie zu einem zweiten Element (60, 68) zurückstrahlt, das sie zu einem Bündel paralleler polychromatischer Lichtstrahlen rekombiniert.

16. Vorrichtung nach Anspruch 15,
**dadurch gekennzeichnet, dass** die Blende (26) zwischen dem zweiten Element (56, 64) der Dispersionsmittel und dem ersten Element (58, 66) der Rekombinationsmittel angeordnet und quer zu den aus den Dispersionsmitteln austretenden parallelen Strahlen verschiebbar ist.

## Claims

1. A spectral rejection device for forming an image on an optical sensor, including means (10) for forming a beam of parallel light rays coming from an observed scene, means (24) for spectrally dispersing the beam in at least one direction (X) along which the wavelengths of the dispersed light rays vary substantially continuously, at least one mask (26) disposed on the path of dispersed rays to intercept at least one band of wavelengths, means for positioning and/or moving the mask substantially in the direction previously cited, means (28) for combining dispersed rays into a beam of parallel rays, and means (18) for focusing the combined beam onto the sensor (20), **characterized in that** the mask is dimensioned to intercept a narrow band of wavelengths without modifying the sensitivity or the operating point of the sensor (20) and without significantly modifying the transmission of the device when it is positioned or moved in the direction previously cited.

2. A device according to claim 1, **characterized in that** the device includes means for moving the mask (26) at a high speed over a distance substantially corresponding to the spectral width of the optical sensor (20).

3. A device according to claim 1, **characterized in that** the mask (26) is moved periodically at a rate synchronized to the operation of a video camera.

4. A device according to one of the preceeding claims, **characterized in that** the mask (26) and the means for moving it include a galvanometer whose pointer forms the mask or a pointer mounted on a carriage.

5. A device according to one of the claims 1 to 3, **characterized in that** said device operates by reflection and **in that** the mask is formed by a slit in a mobile mirror placed between the disperser means and the combiner means.

6. A device according to any one of the preceeding claims, **characterized in that** the optical sensor (20) includes a series of individual TDI sensors which are controlled so that each provides an individual image of the observed scene.

7. A device according to any one of the preceeding claims, **characterized in that** the device comprises data processing means associated with the optical sensor (20) to subtract from each other the output signals of the TDI sensors acquired simultaneously or for subtracting from each other output signals of the optical sensor acquired successively for slightly different positions of the mask and to differentiate with respect to the wavelength the luminous flux received by said optical sensor.

8. A device according to any one of claims 1 to 7, **characterized in that** the means (24) for spectrally dispersing the beam includes a prism and a lens (40) placed between the prism (38) and the mask, the latter lying in the focal plane of the lens (40).

9. A device according to claim 8, **characterized in that** the combiner means (28) includes a second lens (42) and a second prism (44), for example respectively identical to the lens and the prism of the disperser means (24), the mask (26) lying in the object focal plane of the second lens (42).

10. A device according to claim 8 or 9, **characterized in that** the direction X in which the mask (26) moves is inclined obliquely to the axis of the lens (40) of the disperser means to correct the chromatic dispersion of that lens.

11. A device according to one of claims 1 to 7, **characterized in that** the disperser means includes a plane or concave grating (30) and the combiner means includes a concave mirror (32) receiving rays dispersed by the grating (30) and reflecting them toward a collimator lens (34), the mask being placed on the path of rays dispersed by the grating (30) or on the path of rays reflected by the concave mirror (32).

12. A device according to one of claims 1 to 7, **characterized in that** the disperser means includes a concave grating (46) associated with a plane mirror (48) that receives rays dispersed by the concave grating and reflects them toward the mask (26) and the combiner means.

13. A device according to claim 12, **characterized in that** the combiner means includes a plane mirror (50) and a concave grating (52), the plane mirror receiving rays leaving the disperser means and reflecting them toward the concave mirror (52), which forms them into a beam of parallel rays.

14. A device according to one of claims 1 to 7, **characterized in that** the disperser means includes two identical components (54, 56, 62, 64), such as prisms or gratings, disposed one after the other and reversed one relative to the other to provide at the output of the second component (56, 64) a beam of parallel monochromatic rays.

15. A device according to claim 14, **characterized in that** the combiner means includes two identical components (58, 60, 66, 68), such as prisms or gratings, disposed one after the other and reversed one relative to the other, the first component (58, 66) receiving rays spectrally separated by the disperser means and directing them toward the second component (60, 68) which combines them into a beam of parallel polychromatic rays.

16. A device according to claim 15, **characterized in that** the mask (26) is disposed between the second component (56, 64) of the disperser means and the first component (58, 66) of the combiner means and is mobile perpendicularly to parallel rays leaving the disperser means.
